Europäisches Patentamt

European Patent Office

Office européen des brevets

(19)

(11) **EP 0 550 473 B1**

(12) **FASCICULE DE BREVET EUROPEEN**

(45) Date de publication et mention
de la délivrance du brevet:
**11.12.1996 Bulletin 1996/50**

(21) Numéro de dépôt: **91915806.3**

(22) Date de dépôt: **23.09.1991**

(51) Int. Cl.$^6$: **A01D 34/64**, A01D 34/43,
A01D 69/02

(86) Numéro de dépôt international:
**PCT/BE91/00068**

(87) Numéro de publication internationale:
**WO 92/04817 (02.04.1992 Gazette 1992/08)**

(54) **SYSTEME DE TONTE CONTINUE ET AUTONOME**

KONTINUIERLICHE AUTONOME MÄHVORRICHTUNG

CONTINUOUS, SELF-CONTAINED MOWING SYSTEM

(84) Etats contractants désignés:
**AT BE CH DE DK ES FR GB GR IT LI LU NL SE**

(30) Priorité: **24.09.1990 BE 9000906**
**04.06.1991 BE 9100537**

(43) Date de publication de la demande:
**14.07.1993 Bulletin 1993/28**

(73) Titulaire: **COLENS, André**
**1330 Rixensart (BE)**

(72) Inventeur: **COLENS, André**
**1330 Rixensart (BE)**

(74) Mandataire: **Colens, Alain**
**c/o Bureau Colens SPRL**
**rue Frans Merjay 21**
**1050 Bruxelles (BE)**

(56) Documents cités:
DE-A- 2 448 130          DE-A- 3 918 867
FR-A- 2 631 466          FR-A- 2 645 700
GB-A-  818 303           GB-A- 2 115 182
US-A- 3 570 227          US-A- 4 694 639
US-A- 4 777 785          US-A- 4 887 415
US-A- 4 942 723

• MACHINE DESIGN. vol. 61, no. 6, 23 Mars 1989,
CLEVELAND US page 18; 'Self-steering mower
may become commercial reality'
• PATENT ABSTRACTS OF JAPAN vol. 7, no. 262
(P-238)22 Novembre 1983 & JP,A,58 144 217 (
KUBOTA TEKKO ) 27 Août 1983
• MACHINE DESIGN. vol. 31, no. 4, 19 Février
1959, CLEVELAND US page 30; ROBERT
GARDENER: 'Sun-Powered Slave Will Mow
Grass, Shovel Snow'
• MACHINE DESIGN. vol. 61, no. 6, 23 Mars 1989,
CLEVELAND US page 18; 'Self-
• steering mower may become commercial reality'
voir le document en entier

## Description

La présente invention concerne une tondeuse à gazon autonome selon le préambule de la revendication 1. Une telle tondeuse est connue du document "Machine Design, 31 (1959.02.19)".

Selon un mode de réalisation particulier de l'invention l' engin est entièrement autonome et automatique.

L'expression 'autonome et automatique' signifie que l'engin ne requiert pas d'intervention humaine durant la totalité ou une partie de la période de tonte et prend toute décision concernant l'évaluation d'obstacles, leurs contournements, la recherche des zones à tondre, son état de fonctionnement et l'évaluation des limites des zones de tonte.

Avantageusement l'engin peut ne nécessiter aucun ravitaillement à une source d'énergie.

Par 'entretien continu des pelouses' on entend que l'engin est activable constamment durant la période de tonte en fonction de certains paramètres ce qui, entre autres, permet d'éliminer le problème du ramassage de l'herbe coupée.

On sait que les tondeuses à gazon ont subi une longue évolution. Les modèles autotractés, largement répandus aujourd'hui, ont considérablement réduit le travail de l'utilisateur. Une présence humaine est toutefois requise.

Des essais ont également été faits pour automatiser partiellement ou totalement le travail de tonte mais n'ont pas jusqu'ici donné entière satisfaction.

Ainsi le brevet des Etats-Unis 4.777.785 décrit un modèle de tondeuse robot qui détecte les parties de pelouses tondues et non tondues, permet au robot de suivre les limites de l'herbe déjà coupée et de tondre automatiquement la surface restante. Le système n'est cependant pas entièrement automatique. Il requiert la mise en place de la machine à chaque tonte et le contournement manuel des obstacles.

Le brevet français 2 631 466 divulgue l'application d'un système entièrement automatique mais qui nécessite préalablement des travaux importants sur la surface à tondre, tel la mise en place d'une série de fils à fonction spécifique, parcourus par des courants alternatifs de trois fréquences différentes.

La plupart des autres systèmes similaires qui sont proposés dans l'art antérieur nécessitent soit une intervention humaine (voir p.e. brevets des Etats-Unis 3 425197, 3924389, 4133404, 4545453), soit la mise en place de câbles enterrés, ( brevets Etats-Unis 3550714, 3570227). Ces dispositifs sont par ailleurs lourds, onéreux et ne sont pas autonomes quant à leur alimentation énergétique.

On connaît aussi des engins préprogrammés qui effectuent un parcours prédéterminé sur la pelouse. Ceux-ci peuvent cependant dévier accidentellement du trajet préassigné et causer en outre des dégâts. Ils nécessitent également une mise en place manuelle de la machine à chaque début de tonte.

Enfin, le document Machine Design , 31 Vol 4 1959 se rapporte à un engin fictif pour tondre le gazon. L'engin est commandé à distance, la hauteur de l'herbe étant détectée par un oeil électrique et une batterie étant rechargée par l'énergie solaire pendant que la tondeuse n'est pas en fonctionnement. La tondeuse travaille donc par cycles et rejoint un abri entre ceux-ci. La puissance de cet engin fictif est telle qu'il pourrait également être adapté pour débarrasser de la neige une surface enneigée.

Toutes les systèmes précédents font appel à une technique de tontes ponctuelles - la tondeuse travaillant intensément durant une période déterminée - séparées par des périodes durant lesquelles la tondeuse est remisée.

Le brevet français 2645700, publié après la date de priorité la plus ancienne de la présente demande, concerne une tondeuse robotique à alimentation solaire comprenant cependant obligatoirement un système de coupe à effet de cisaillement.

Le but de la présente invention est de fournir un engin automatique et autonome qui ne présente pas les inconvénients susmentionnés - notamment intervention manuelle, infrastructure lourde, risques d'accidents, mise en place et remise de la tondeuse - et élimine la nécessité du ramassage de l'herbe coupée du fait de son fonctionnement continu.

Par rapport aux systèmes antérieurs, l'engin de tonte selon l'invention présente une importante réduction de poids, permet l'utilisation d'un moteur peu puissant favorisant ainsi la sécurité d'utilisation, et fonctionne silencieusement.

Il a en effet été constaté que, de manière surprenante, pareil engin peut être conçu en se basant uniquement sur une source d'énergie de très faible puissance, permettant l'alimentation directe de l'engin à partir d'une source photovoltaïque apte à être portée par la tondeuse. Selon un mode alternatif de l'invention, l'alimentation est à cellules photovoltaïques, la seule source d'énergie utilisée étant l'énergie solaire. La faible puissance de l'engin peut être compensée par le fait que la tonte se déroule de manière quasi-permanente durant toute ou une partie de la période de tonte, la pelouse étant ainsi en fait maintenue tondue.

L'invention propose donc une tondeuse à gazon autonome, à moteur(s) électrique(s) comportant au moins un système de coupe, une roue motrice, un système électronique de commande et de contrôle, une batterie rechargeable et/ou des cellules photovoltaïques, caractérisé en ce que

le système de coupe est à faible consommation, consommation permettant l'alimentation directe de la tondeuse à partir d'une source photovoltaïque, apte à être portée par la tondeuse, en fonctionnement le parcours de la tondeuse étant déterminé en outre par des réponses à des obstacles aux limites de la surface à tondre et/ou des câbles alimentés par un faible courant de sorte que la tonte puisse se dérouler de manière quasi-permanente durant toute ou une partie de la période de tonte, la pelouse étant ainsi en fait maintenue tondue;

réponses dépendantes d'un algorithme mis en mémoire et traité par un microprocesseur, la tondeuse étant soit en fonctionnement, soit en état d'attente ou de recharge, le fonctionnement dépendant de l'état de charge de la batterie rechargeable et/ou de l'ensoleillement.

La tondeuse, lorsqu'elle est utilisée, est donc activable en continu et est activé en fonction notamment de ces derniers paramètres.

Dans le cadre de l'invention on entend par 'tonte' aussi bien la tonte d'une pelouse dont l'herbe est d'une hauteur telle qu'une opération de tonte est souhaitable qu'une tonte consistant simplement à maintenir une pelouse tondue. L'invention par sa nature et ses moyens est cependant plus adaptée au maintien d'une pelouse à l'état tondu. Une opération de tonte initiale d'une pelouse dont l'herbe pourrait déjà être trop haute pourrait ne pas permettre le fonctionnement normal de l'engin selon l'invention, engin dont la puissance est par nature limitée. Une tondeuse est donc un moyen adapté à la tonte comme défini ci-dessus.

L'engin tel que décrit ci-après est plus particulièrement adapté à la tonte d'une surface de gazon. Dans le cadre de la présente invention, la tondeuse peut cependant être utilisée pour le traitement de toute autre surface végétale susceptible d'être entretenue par une coupe continue ou périodique à une hauteur déterminée, généralement inférieure à 80 cm, de préférence inférieure à 20 cm. Le terme gazon incorpore donc de nombreux végétaux autres que l'herbe.

Le terme 'roue' dans le cadre de la présente invention incorpore également des chenilles ou tout autre moyen d'avancement équivalent.

Par 'activable en continu' on entend que l'engin est capable de répondre à un paramètre d'environnement ou à l'état de charge d'une batterie, provoquant ainsi sa mise en marche sans intervention de l'utilisateur. Selon un mode préféré de l'invention, le circuit électronique et le microprocesseur fonctionne en continu même lorsque l'engin est en état de repos, de recharge ou d'attente.

Selon un mode préféré, la tondeuse comporte en effet une batterie rechargeable qui peut être alimentée par des cellules photovoltaïques.

Selon une variante de réalisation, la batterie rechargeable peut être alimentée à une source d'alimentation présente sur ou à proximité de la surface à tondre, la tondeuse s'y déplacant automatiquement selon un algorithme déterminé dépendant entre autres de l'état de charge de ladite batterie.

Selon un aspect de l'invention la tondeuse est caractérisée en ce que la puissance totale est comprise entre 10 et 120W de préférence 15 à 60 W.

Selon un autre aspect de l'invention, la tondeuse est caractérisée en ce que la capacité de la batterie rechargeable est inférieure à 5 A/h, de préférence inférieure à 2 A/h.

Selon encore un autre aspect de l'invention, la tondeuse est caractérisée en ce qu'elle interrompt tout mouvement et toute opération de tonte lorsque l'état de charge de la batterie ou l'ensoleillement est inférieure à une valeur de consigne, l'engin se trouvant soit en état d'attente soit en état de recharge.

Selon encore un autre aspect de l'invention, la tondeuse est caractérisée en ce que le parcours est déterminé notamment par la mesure de l'effort fourni par le système de coupe.

Selon encore un autre aspect de l'invention, la tondeuse est caractérisée en ce qu'à chaque roue motrice est associée un moteur indépendant.

Selon encore un autre aspect de l'invention, la tondeuse est caractérisée en ce qu'à chaque roue est associé un détecteur de charge.

Selon encore un autre aspect de l'invention, la tondeuse est caractérisée en ce qu'elle détecte les limites de la zone à tondre fixées par un ou des câbles alimentés par un faible courant par l'intermédiaire d'un détecteur de limite, p.e. un détecteur de champ à l'avant dudit chassis.

Selon encore un autre aspect de l'invention, la tondeuse est caractérisée en ce que les obstacles sont détectés et contournés par analyse des mouvements relatifs d'un plateau supérieur, comportant éventuellement des cellules photovoltaïques, et d'un châssis inférieur.

On peut à cet égard avantageusement prévoir un système d'analyse du choc permettant de discriminer un choc résultant de la présence d'un obstacle de celui résultant de l'irrégularité de la surface (trou ou bosse) ne nécessitant pas un contournement. L'algorithme appliqué par le microprocesseur peut en effet ne pas tenir compte d'éventuelles oscillations causées par un choc dû à une irrégularité, grâce par exemple à un filtrage numérique connu en soi.

Selon encore un autre aspect de l'invention, la tondeuse est caractérisée en ce que le poids de la batterie rechargeable est inférieure à 5 kg, de préférence inférieure à 1 kg.

L'invention concerne également une méthode pour tondre une pelouse caractérisée en ce qu'un engin comme précédemment décrit est mis en place et laissé de manière autonome pendant au moins plusieurs jours.

La méthode est plus particulièrement adaptée pour maintenir une pelouse tondue , l'engin étant mis en place et laissé de manière autonome pendant au moins plusieurs jours, éventuellement plusieurs semaines ou pour la période de tonte qui dure plusieurs mois.

L'engin de tonte pour pelouse présentant les éléments suivants, isolément ou en combinaison :

- un système de coupe à faible consommation, permettant l'alimentation directe de l'engin à partir d'une source photovoltaïque;
- une alimentation par cellules photovoltaïques;
- un système électronique de contrôle
- une détection des surfaces d'herbes à couper par mesure de l'effort fourni par le système de coupe

- une recherche des surfaces d'herbe à couper par l'interaction du système d'avancement de l'engin, du dispositif de détection précité et d'un microordinateur;
- une détection des obstacles par l'analyse des mouvements relatifs du plateau supérieur de l'engin et de son châssis
- une détection des limites de la surface de tonte par l'analyse de l'espacement entre deux obstacles . La limite de surface de tonte non fixée par des obstacles naturels (plantation, grillage, muret, rebord) est déterminée soit par des plots posés sur le sol à des intervalles maximum spécifiques soit par un câble posé ou enterré.
- un système de sécurité basé sur l'utilisation d'un détecteur de charge sur chaque roue.
- un dispositif anti-vol basé sur la mesure de l'éloignement au sol et/ou sur un code propre de l'utilisateur

Selon une caractéristique particulièrement originale de l'invention, l'engin est déposé sur la surface à tondre en début de saison et son fonctionnement a lieu dès que l'énergie lumineuse ambiante dépasse un certain seuil.

L'engin peut et sera donc de préférence laissé sur la surface à tondre pendant au moins plusieurs jours et peut être laissé de manière autonome pendant plusieurs mois voire pendant la saison de tonte complète.

Selon un mode particulier de réalisation, en état de fonctionnement, l'engin se déplace constamment sur la surface à tondre en faisant décrire à la tête de tonte un mouvement d'oscillations à droite et à gauche de l'axe d'avancement.

Le mouvement oscillant de la tête de l'engin permet de détecter la distance entre deux obstacles. Si l'engin détecte par exemple un obstacle sur sa gauche, il fera mouvoir sa tête vers la droite et Si un obstacle est détecté ensuite sur la droite à une distance inférieure à une distance fixée et préprogrammée, l'ordinateur considère alors qu'il a atteint les limites de la surface à tondre et fait demi-tour.

Par ailleurs, selon une autre caractéristique préférée de l'invention, lorsque l'engin atteint une zone déjà tondue, la charge sur la tête de tonte diminue, phénomène détecté par l'ordinateur de contrôle qui transmet davantage de puissance aux roues motrices jusqu'à ce qu'une zone non tondue soit rencontrée.

L' algorithme de l'ordinateur de contrôle permet d'optimaliser l'efficacité de cette recherche et d'organiser le travail de tonte. De préférence l'ordinateur sera muni d'une horloge auquel l'algorithme de fonctionnement fera appel.

Selon un mode de réalisation particulier de l'invention , lorsque qu'un obstacle se présente, le plateau supérieur de l'engin comprenant des cellules photovoltaïques entre en contact avec l'obstacle. Le plateau supérieur étant fixé de manière souple au plateau inférieur, il se déplace par rapport à ce dernier. Un détecteur de déplacement détecte le mouvement relatif et, de là, la position de l'obstacle vis à vis de l'engin. L'information est transmise à l'ordinateur qui commande les roues motrices pour se dégager, contourner l'obstacle ou faire demi-tour.

L'engin selon un mode alternatif de l'invention comporte une batterie rechargeable intervenant d'une part pour la tonte des zones d'ombres, et d'autre part pour le lissage de l' alimentation photovoltaïque éventuelle et assurant de plus l'alimentation en continu du système de commande et de contrôle électronique, ce qui permet à l'engin d'être activable en continu en fonction de certains paramètres tels l'état de charge de la batterie , l'environnement et l'ensoleillement.

Des moyens peuvent être en outre prévus pour détecter les zones d'ombre et adapter l'organisation de la tonte en conséquence, en tenant compte de divers paramètres tel le niveau de charge de la batterie, l'heure, la hauteur de l'herbe etc.

Selon un mode préféré de l'invention, l'engin comprend un châssis sur lequel sont montés avantageusement deux roues ou chenilles motrices indépendantes actionnées chacune par un moteur électrique . Le contrôle différentiel de la vitesse de chaque roue permet de diriger l'engin. L'engin comprend de une ou deux roues libres à l'avant, les roues formant ainsi un triangle ou un trapèze et supportant le châssis. Une tête de coupe solidaire du châssis comporte un moteur électrique basse tension de faible puissance et un disque de coupe de petit diamètre et à haute efficacité.

Un plateau supportant des cellules photovoltaïques est monté de manière souple sur le châssis.

L'engin comporte également un boîtier électronique comprenant

- un ordinateur de contrôle
- un capteur de mouvement du plateau à cellules photovoltaïques
- des circuits de puissance commandant notamment

  - la tête de coupe
  - les deux roues motrices
  - éventuellement une signalisation sonore
  - la régulation du courant provenant des cellules photovoltaïques

- le circuit de mesure de l'énergie absorbée par le dispositif de coupe

Trois détecteurs de charge (soit une par roue) seront de préférence prévus connectés au boîtier électronique.

L'engin selon l'invention présente donc une structure très légère ,p.e. de 4 kg comparé à 40 kg pour une tondeuse automatique à batteries, associée à une unité de coupe à haute efficacité et à un programme informatique permettant la recherche des
zones à tondre, la recherche et le contournement des zones d'ombres, la détection d'obstacles, la détection des limites du terrain à tondre, la détection et la gestion des irrégularités du sol (pente, bosses) et la détection du degré d'humidité de la pelouse.

L'engin selon l'invention peut ainsi maintenir une pelouse tondue d'une superficie de 1000 m2, sous une latitude correspondant à celle de la Belgique, avec une consommation moyenne, en fonctionnement, de 25 Watt.

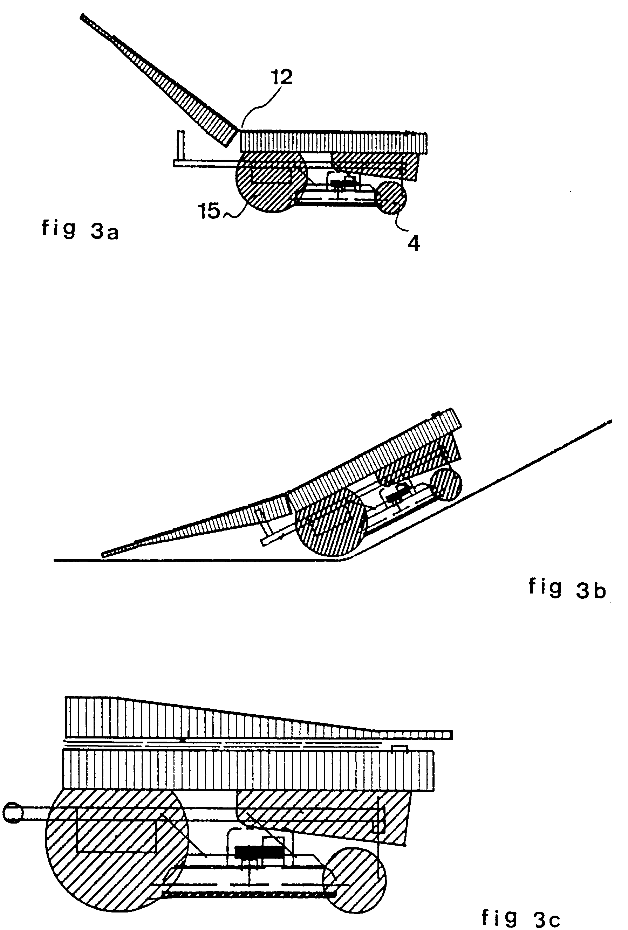

L'invention sera plus complètement décrite en se basant sur les figures 1 à 14 ci-annexés, présentées à titre d'exemples de réalisation non limitatifs.

La fig. 1 représente une vue en plan partiellement brisée d'une forme de réalisation de l'engin selon l'invention présentant un profil ovale.

La fig. 2 représente une coupe latérale de l'engin selon la figure 1.

Les fig. 3a, 3b, 3c représentent des vues latérales de l'engin montrant sa partie postérieure respectivement partiellement rabattue, en position de montée d'une cote, et en position entièrement repliée autour d'une charnière transversale.

La fig. 4 est une autre coupe latérale de la tête de coupe.

Les fig. 5a et 5b représentent des vues en plan de deux modes de réalisation de la tête de coupe.

La fig. 6 représente un diagramme de blocs reprenant quelques éléments de l'engin et ses relations avec le système de contrôle électronique.

La fig. 7 représente un diagramme de blocs simplifié du programme de contrôle.

Les fig. 8 à 11 illustrent les algorithmes de coupe pouvant être appliqués.

Les fig. 12 et 13 illustrent des exemples de circuits électroniques pouvant être appliqués respectivement pour empêcher la décharge des batteries en position d'attente et les perturbations électromagnétiques au niveau d'un détecteur de limite, p.e. un détecteur de champ, lorsque le moteur fonctionne.

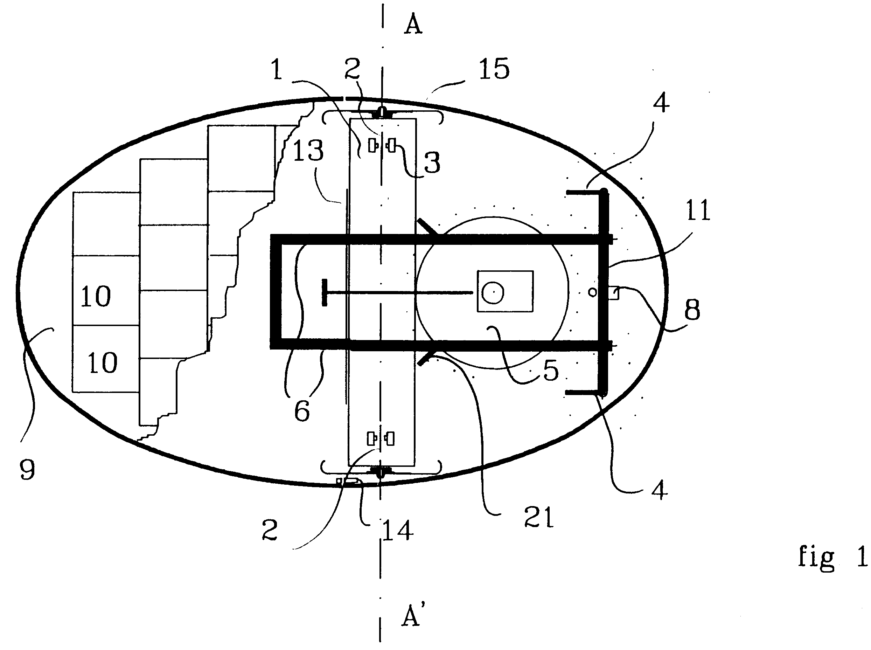

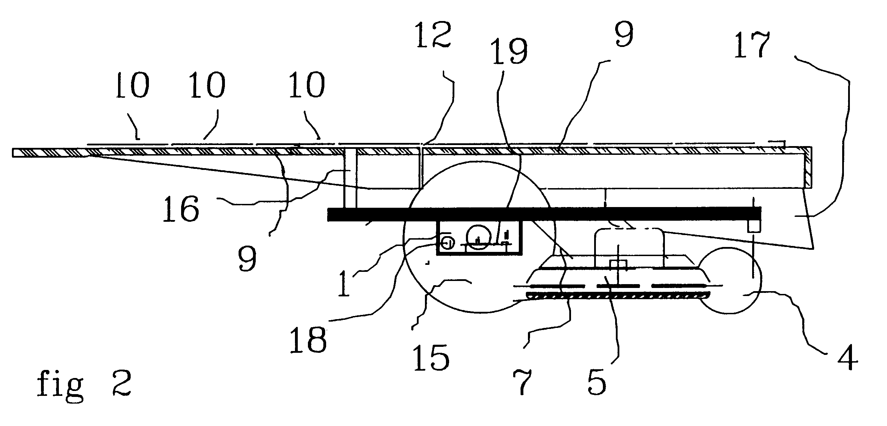

Selon les fig. 1 et 2, un châssis poutre 1 supporte le circuit électronique de commande décrit plus en détail par la suite, les deux motoréducteurs d'entraînement des roues motrices 15, une batterie 18 de faible capacité (p.e. 1A/h) permettant de garder le circuit en veilleuse durant les absences de lumière et de lisser le courant provenant des cellules voltaïques. Le châssis supporte un panneau 9 couvert de cellules photovoltaïques 10 juxtaposées en mosaïque. Le châssis 1 supporte en outre des attaches souples 2 situées dans l'axe A-A' des deux roues motrices 15 qui permet un mouvement relatif du panneau 9.

Selon un exemple de réalisation particulier on utilisera 34 cellules de 100 x 100 mmm PSC100 H (Kyocera) de 44.2 W (crête).
Les attaches souples 2 permettent un mouvement longitudinal du panneau 9 et empêchent un mouvement transversal. L'engin se déplace perpendiculairement à l'axe A-A'.

Des contacts 3 situés de part et d'autre des attaches 2 permettent de détecter des mouvements de translation et de rotation du panneau 9 et , à l'aide de l'ordinateur de contrôle 19, de localiser l'obstacle. Les contacts peuvent être remplacés par tout autre détecteur électronique de mouvement et de position.

Deux roues libres 4 sont montées à l'avant et reliés mécaniquement au châssis poutre. La tête de coupe 5 est suspendue entre le châssis poutre et les deux roues 4.

Selon le mode de réalisation illustré, la tête de coupe est suspendue aux deux longerons 6 au moyen de tiges filetées permettant d'ajuster la hauteur de coupe.

Selon une autre possibilité on prévoit une liaison de la tête de coupe aux longerons par l'intermédiaire d'un couple de parallélogramme tubulaire (7 fig. 2) dont un seul côté longitudinal supérieur est solidaire rigidement au châssis , les angles formant charnières . Une butée est prévue qui permet de régler la hauteur de la tête de coupe sans entraver son mouvement vers l'avant.

Ce dernier dispositif présente l'avantage de permettre à la tête de coupe de se soulever en cas d'irrégularités du sol lorsque l'engin évolue en marche arrière. En marche avant par contre le couple des roues motrices allège l'avant de l'engin en cas de résistance à l'avancement permettant le passage aisé de l'obstacle sans nécessiter un retrait de la tête de coupe. Un couplage mécanique non montré sur le dessin peut être réalisé entre la tête de coupe et le panneau supérieur de manière à ajuster automatiquement la hauteur de la garde avant 17 de l'engin à la hauteur de coupe.

Un détecteur de champ 8 est monté à l'avant de l'engin.

Alternativement d'autres types de détecteur, p.e. magnétique, optique etc., peuvent y être montés.

Le panneau 9 supportant les cellules voltaïques 10 est fixé au châssis au moyen des attaches 2 et d'une attache pivot 11 située à l'avant.

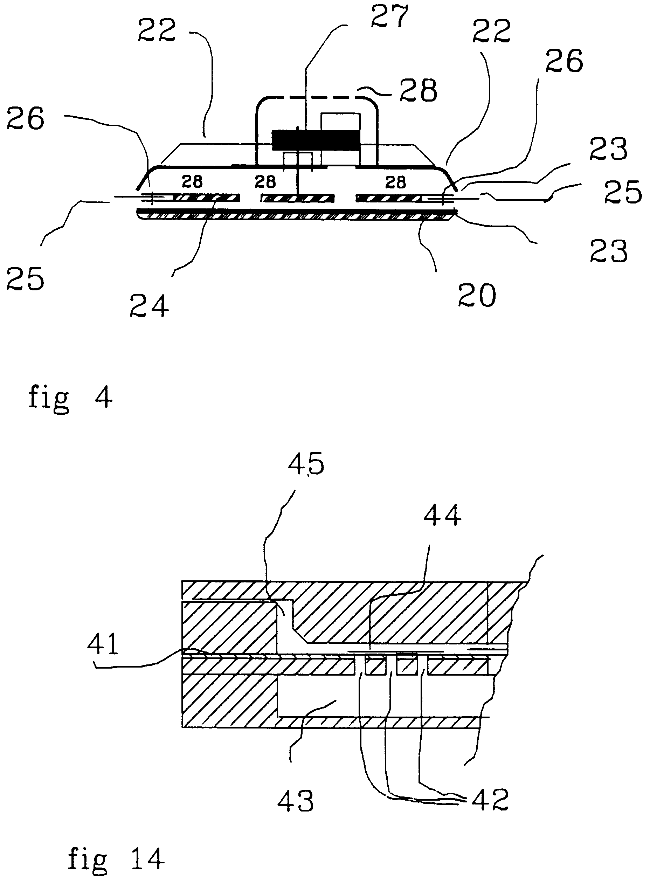

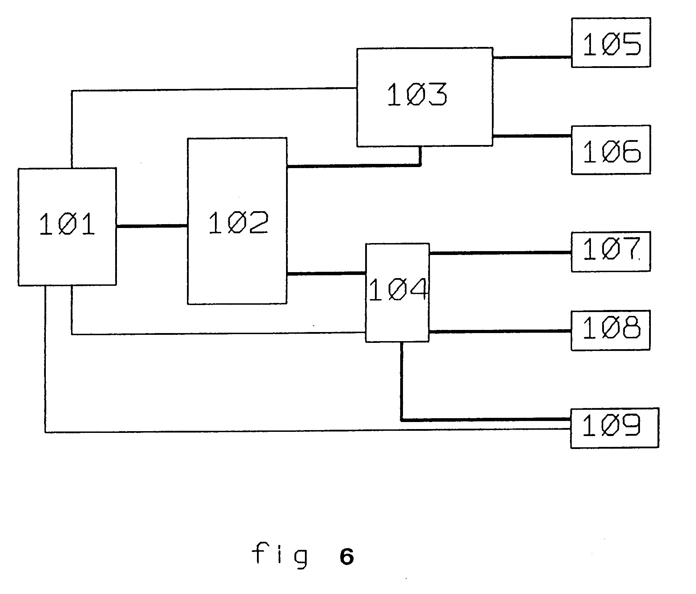

Comme plus amplement illustré dans les fig. 4 à 6, le panneau 9 est réalisé en deux parties articulées autour d'une charnière 12.

La présence d'un panneau articulé permet de résoudre plusieurs problèmes se posant lors de la conception pratique de l'engin selon l'invention.

L'articulation de la partie arrière du panneau donne la possibilité de diminuer la hauteur de l'engin tout en permettant l'accès aux pentes importantes en gardant une surface de panneau suffisante et un équilibrage du poids adéquat sur les roues motrices. Le bon équilibrage de l'engin implique un porte à faux important à l'arrière. Lorsque l'engin attaque une côte, l'arrière du panneau s'articule autour de la charnière au contact physique avec le sol, permettant ainsi le passage de l'engin.

Par ailleurs , le panneau peut pivoter de 180 ° et permet donc de réduire jusqu'à la moitié l'encombrement longitudinal de l'engin, par exemple pour son transport à l'état déconnecté et non utilisé.

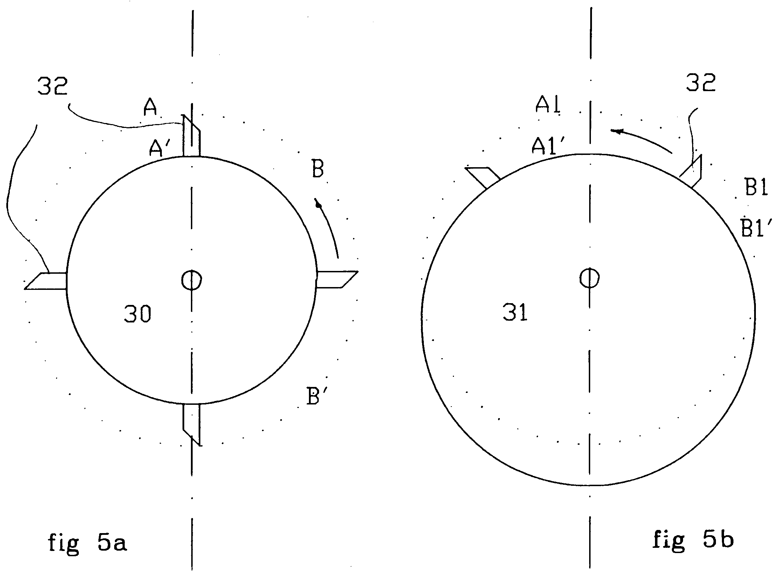

Les figures 4 et 5 illustrent respectivement les positions du panneau lors de la montée d'une pente et, par exemple lors du transport, sous forme entièrement repliée, l'engin étant alors déconnecté et non utilisé.

Un contact 14 est fixé sur l'articulation de manière à ce que si l'angle de pivotement du panneau dépasse une certaine valeur l'engin s'arrête. L'engin s'arrête ainsi automatiquement en cas de retournement par l'avant ou en cas d'urgence, manuellement, en relevant la partie arrière.

Une butée permettant le mouvement horizontal du panneau peut accessoirement être prévue pour diminuer l'effort sur les charnières. Le support de butée 16 peut alors avantageusement être utilisée comme poignée de portage.

Un panneau de contrôle 13 est fixé sur la partie arrière du châssis poutre 1 permettant à un utilisateur d'arrêter complètement l'engin ou d'introduire des données pour l'ordinateur de contrôle (code de sécurité, paramètre de marche).

Les roues motrices 15 sont individuellement commandées par des motoréducteurs de puissance nominale de 2 à 10 Watt et ont une conformation qui leurs permettent une bonne adhérence dans le sens parallèle à la marche et un pivotement aisé dans le sens perpendiculaire. Par exemple, leur forme creuse permet un poids très réduit et supprime le porte à faux sur l'axe de sortie du motoréducteur.

La tête de coupe de l'engin selon l'invention présente avantageusement une solution à la recherche d'un rendement optimum en relation avec quatre types de consommation :

- entraînement de l'herbe par le mouvement de l'outil de coupe,
- entraînement de l'air par le mouvement de l'outil de coupe
- frottements
- effort de coupe proprement dit

Les systèmes de coupe conventionnels effectuent la coupe de l'herbe sous le capot, l'herbe coupée étant entraînée par le système en rotation.

Une partie importante de l'énergie utilisée lors de la tonte classique avec les système antérieurs sert donc à communiquer une énergie cinétique à l'herbe qui est propulsée par la lame de coupe.

Le dispositif décrit ci-après , qui constitue un mode particulier de réalisation de l'invention, élimine en grande partie le contact de l'herbe avec le système en rotation.

La tête de coupe est constituée en effet d'un plateau 20 raccordé par des brides 21 au plateau supérieur 22 dont la forme est étudiée pour ne laisser qu'un espace 23 très faible entre les deux plateaux.

Un disque 24 comporte de préférence au moins deux lames rétractables 25 pivotant autour d'un axe 26 et pouvant rentrer dans l'intérieur du disque. Lorsque le disque entre en rotation, entraîné par le moteur 27, les lames s'écartent par la force centrifuge et sortent par l'espace 23 entre les deux plateaux fixes 20,22.

La partie en mouvement en contact avec l'herbe est extrêmement réduite ce qui limite considérablement l'entraînement de l'herbe par le système en rotation.

Une circulation d'air 28 provoqué par la rotation du disque mais maintenue à un minimum grâce au profilage du disque et au faible espace entre les plateaux fixes empêche les débris de l'air de s'introduire dans la tête de coupe et le système d'articulation des lames. Les frottements sur la surface à tondre sont éliminés grâce au disque inférieur 20 et ceux dus aux débris d'herbe sont éliminés grâce à la circulation d'air 28.

Les lames 25 très minces permettent une coupe efficace. Un système de ressort peut permettre un échange aisé des lames.

La faible inertie des lames, leur retrait à l'intérieur du disque en cas de choc et la très faible puissance du moteur sont des facteurs offrant une sécurité d'utilisation particulièrement avantageuse.

La fig. 5a et 5b illustrent un mode particulier de réalisation de la tête de coupe selon l'invention qui s'est révélé particulièrement avantageux. Il a en effet été constaté que l'effet de freinage de l'herbe déjà coupée sur le disque de coupe est minimum lorsque l'avance de la machine entre deux passage successifs des lames 32 correspond à la longueur d'une lame. La relation entre la vitesse de la machine et la vitesse des lames peut être établie comme suit :

$$\text{Vitesse machine} = N \times l \times n$$

où

N = nombre de révolution par seconde
l = longueur active de la lame
n = nombre de lames

Ceci n'est cependant vrai que dans l'axe de la machine comme indiqué dans la figure 5a représentant une configuration classique. Un brin d'herbe coupé en A se trouvera sous le plateau 30 en A' lors du passage de la lame suivante. Par contre le brin d'herbe coupé en B se trouvera plusieurs fois sur la trajectoire des couteaux avant d'arriver en B' causant ainsi un freinage inutile des couteaux par contact sans coupe significative.

Selon le mode particulier susmentionné plus particulièrement illustré dans la figure 5b, on utilise des plateaux inférieurs et supérieures circulaires 31 de dimension égale à la surface couverte par les lames en extension dont le centre est décalé vers l'arrière d'une distance égale à la longueur utile des couteaux. La distance pendant laquelle un brin d'herbe est sujet à un contact avec les lames de coupe devient constante quel que soit sa position par rapport à l'axe de la machine.

Dans le cadre de la présente invention, l'optimalisation de l'énergie disponible telle que réalisée avec le mode de réalisation de la tête de coupe susmentionné présente un avantage significatif.

La tête de coupe est commandée de préférence par un moteur à courant continu sans balai à commutation électronique. Ce choix est dicté par les contraintes de durée de vie et de rendement qu'implique le principe de fonctionnement de l'engin. Selon une forme de réalisation, un moteur SEL Alcatel type BG29 de 15 W nominal à 12 V convient particulièrement bien.

Le fonctionnement du moteur à commutation électronique peut provoquer cependant des variations de champs magnétiques très abruptes et difficiles à éliminer. Ceci peut perturber le fonctionnement du détecteur de limite (8) décrit précédemment.

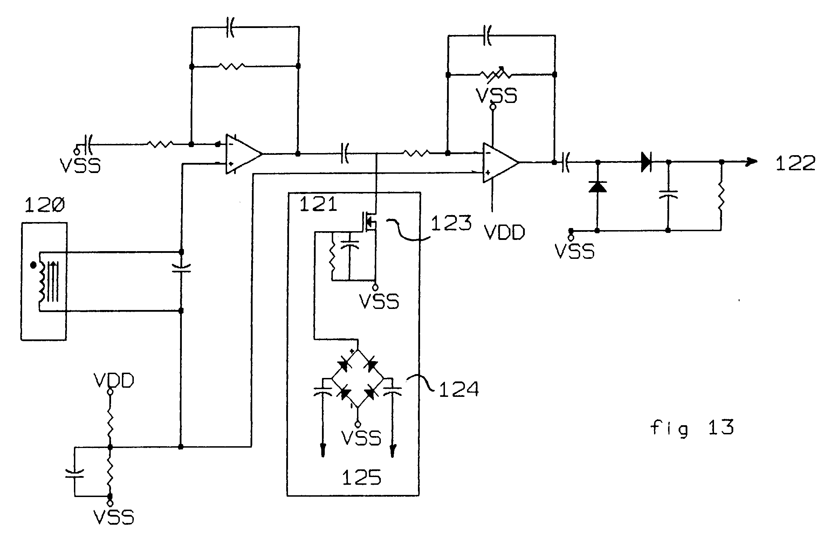

Un circuit (fig. 13 ) permet avantageusement d'éliminer l'effet des perturbations associées à ce type de fonctionnement. On prévoit à cet effet un détecteur 120, un circuit d'alimentation de bruit 121, une connexion vers le contrôleur 122 un transistor 123 T1 des capacités 124 (C1 et C2) et des connections vers l'alimentation du moteur de coupe.

Le signal provenant de la commande du moteur est relié à l'entrée d'un circuit différentiateur c1 c2 et redressé de manière à obtenir une impulsion positive à chaque commutation du moteur. Ces impulsions agissent sur un transistor T1 qui coupe le signal venant du détecteur durant les commutations du moteur. Ceci permet d'améliorer le rapport signal-bruit typiquement d'un facteur 10.

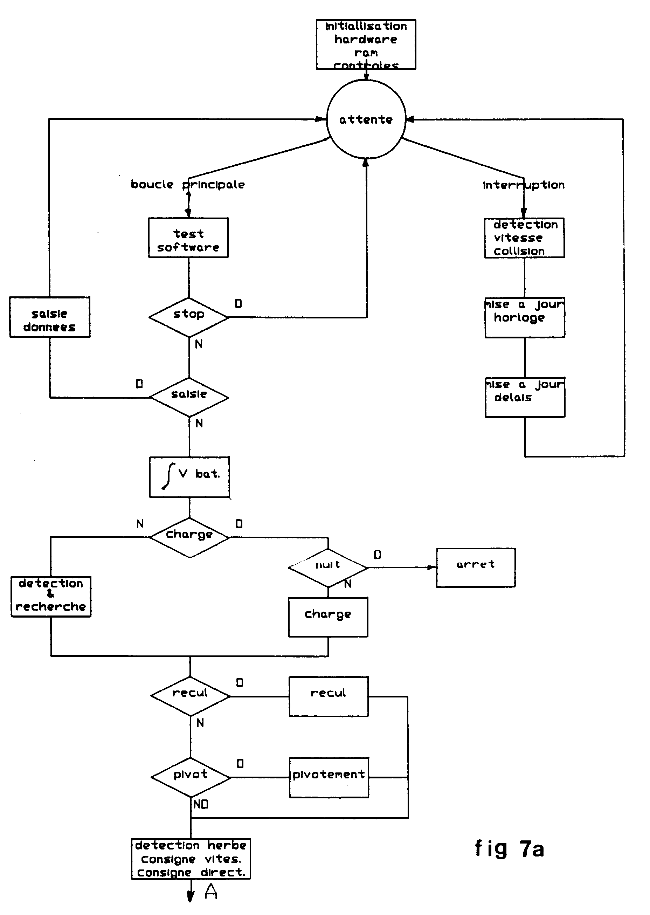

Comme indiqué sur la fig. 7, le contrôle de l'engin de tonte s'effectue à l'aide d'un circuit électronique de commande comportant un microcontrôleur 102 avec en mémoire le programme de gestion de l'engin de tonte. On illustre en outre un dispositif de contrôle d'énergie en 103, de contrôle des moteurs en 104, des cellules photovoltaïques en 105 et une batterie en 106.

Le microcontrôleur reçoit une série d'informations d'environnement (101) p.e.

- tension aux bornes des cellules photovoltaïques
- vitesse de chaque roue
- courant dans la tête de coupe ou vitesse de rotation
- courant généré par les cellules photovoltaïques
- enregistrement d'un choc extérieur
- niveau du champ électrique placé à l'avant de l'engin
- détecteur d'humidité

et en déduit une série de paramètres :

- ensoleillement : par la mesure du courant et de la tension aux bornes des cellules combiné avec les caractéristiques connues des cellules photovoltaïques.
- pentes ou obstacles : par la mesure de la vitesse des roues par rapport à la puissance fournie.
- hauteur de l'herbe : par l'analyse du courant absorbé par la tête de coupe et de la vitesse d'avancement.
- distance par rapport aux limites du terrain déterminée par un fil parcouru par un courant alternatif ou par une masse métallique (chaîne par exemple) et obtenue par l'analyse du signal mesuré aux bornes du détecteur 8.

- zone d'ombre par l'analyse de la variation d'ensoleillement sur une distance parcourue fixée
- état du sol : par analyse des projections d'eau sur un contact monté sur le châssis.

Le microcontrôleur envoie ses consignes à l'unité de gestion de l'énergie et aux circuits de contrôle 104 qui agit sur les trois moteurs 107 108 109 faisant fonctionner l'engin.

Un exemple de programme de contrôle est illustré dans la fig. 7 au moyen d'un diagramme de blocs.

Deux boucles principales régissent le fonctionnement du programme :

- une boucle activée par un signal d'interruption généré toutes les 4 millisecondes par le hardware du microprocesseur. Cette boucle permet d'incrémenter les compteurs de vitesse des 2 roues motrices indépendantes, de vérifier le 'watchdog', d'analyser les détecteurs de collision et de mettre à jour les horloges et délais devant être utilisés par la boucle principale.
- une boucle principale qui active la saisie des données d'environnement toutes les 100 millisecondes et qui en fonction de l'analyse des paramètres extérieurs contrôle les opérations à effectuer par l'engin dans ses différents états:
- fonction de tonte
- manoeuvre (recul, pivotement)
- arrêt pour cause de luminosité trop faible
- arrêt pour cause de pelouse trop humide
- arrêt pour cause de recharge
- alarme (incident, blocage des roues).

L'invention sera mieux comprise à l'aide de la description complémentaire des principaux modes de fonctionnement qui suit.

De nombreux systèmes de guidage peuvent être adoptés. Un guidage basé sur l'analyse de l'effort de coupe s'est révélé particulièrement avantageux.

L'effort fourni par la tête de coupe est constamment mesuré et fournit au système de contrôle une indication de la densité et de la hauteur de l'herbe à couper. Le microcontrôleur ajuste la vitesse de l'engin de façon à garder une vitesse optimale. Lorsque la résistance de coupe est très faible (zone déjà tondue) le contrôleur transfère un maximum d'énergie aux roues motrices de manière à se rendre rapidement vers une zone encore à tondre. La vitesse peut varier par exemple de 1 à 5 km/h.

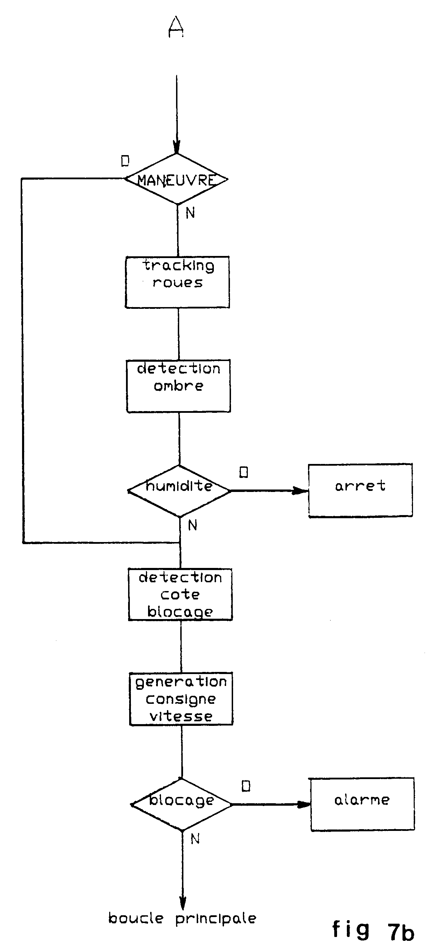

Comme illustré à la figure 8, lorsque le système de contrôle détecte une zone non tondue 81 de la surface à tondre 82, l'engin 80 selon l'invention y pénètre d'une distance spécifique x et décrit une spirale de manière à rester le plus longtemps possible dans la zone présentant une résistance élevée à la coupe (hauteur et densité de l'herbe importante). Lorsqu'il a parcouru une distance y prédéfinie en ne rencontrant plus de résistance l'engin repart en ligne droite en transférant un maximum d'énergie aux roues motrices jusqu'à ce qu'une nouvelle zone moins tondue soit rencontrée.

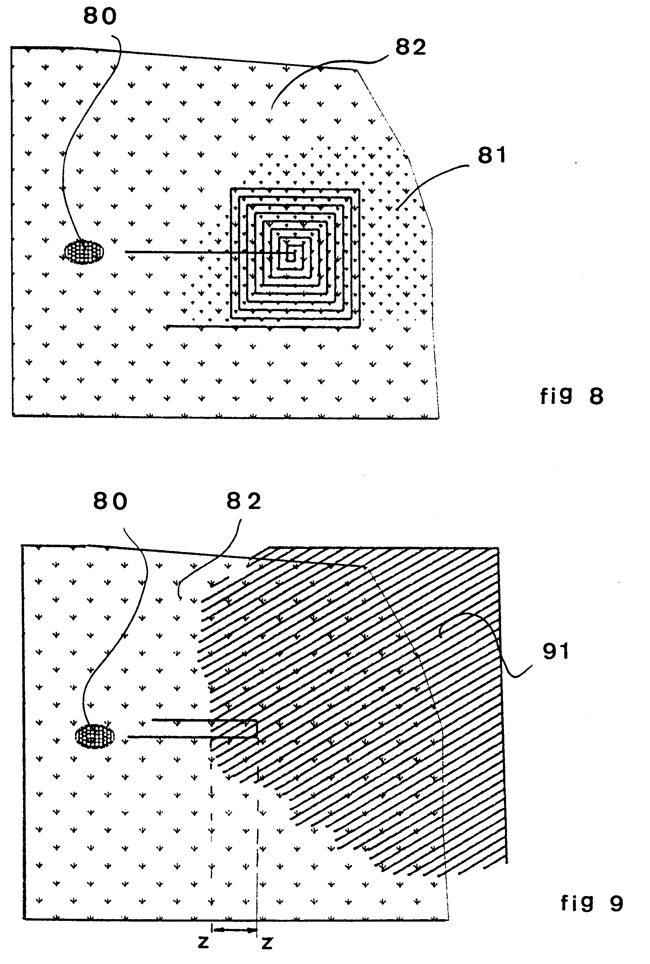

Selon un mode particulier de l'invention, on prévoit un système de détection d'ombre 91 (fig. 9).

Le système de détection d'ombre a pour but d'éviter que l'engin ne reste longtemps dans une zone d'ombre. L'ombre se déplaçant constamment durant la journée, suivant la position relative du soleil, il est possible de tondre la quasi-totalité d'une surface de pelouse 82 tout en restant exposé au soleil, s'il est présent. Les quelques zones constamment à l'ombre sont couvertes soit lors de passage nuageux qui éliminent le contraste de luminosité du à la présence d'ombre soit par des intrusions temporaires dans des zones d'ombre en fonctionnement normal.

Le système de contrôle, dans le but de détecter les ombres, effectue une évaluation de l'énergie reçue par les cellules photovoltaïques à des intervalles correspondant à une distance fixe parcourue par l'engin, distance égale à la largeur d'une cellule. Il compare à chaque instant l'énergie reçue à celle reçue durant l'intervalle précédent. Le passage d'une rangée de cellule du soleil à l'ombre provoque l'enregistrement d'une chute d'énergie. Si cette chute dépasse une valeur prédéterminée, elle est considérée comme un signal d'entrée dans une zone d'ombre. L'engin continue alors son mouvement sur une distance zz' pour vérifier que la zone d'ombre n'est pas accidentelle. Si l'énergie reçue reste à son niveau réduit, l'engin effectue un demi-tour pour revenir vers la zone ensoleillée.

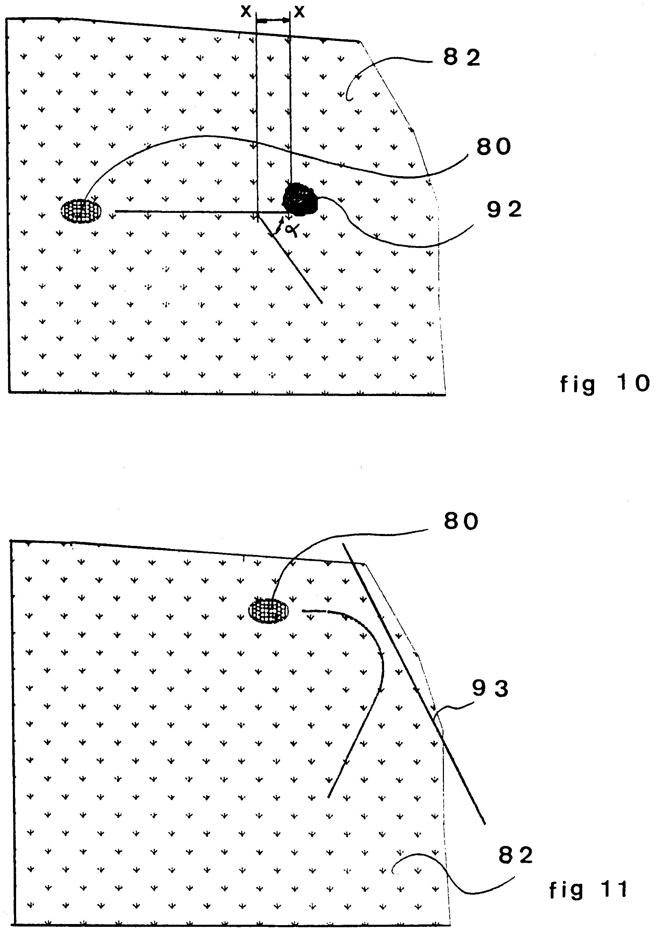

Selon, un autre aspect de l'invention on prévoit un système de détection d'obstacle 92 (fig. 10).

Le système analyse constamment le mouvement relatif du panneau supérieur par rapport au châssis. Lorsqu'un déplacement est enregistré au moyen des contacts 3 et/ou d'autre détecteurs de fonction équivalente, le système réagit en arrêtant l'engin et en lui faisant effectuer une manoeuvre d'évitement définie par le programme de contrôle.

Selon un mode de réalisation particulier de l'invention, l'engin s'arrête, recule d'une distance xx et effectue un pivotement d'un angle alpha avant de repartir.

Selon un autre mode, l'engin pivote dans la direction opposée au choc ce qui permet de vérifier l'espace libre autour de l'obstacle. Si l'espace est supérieur à la largeur de l'engin , l'engin repart sinon il considère avoir affaire à un obstacle continu, p.e. une limite naturelle de la surface à tondre, recule et fait demi-tour.

Selon un autre aspect de l'invention on prévoit un système de détection des pentes et irrégularités du sol.

Le système analyse constamment le rapport entre l'énergie fournie aux 2 roues motrices et leur vitesses pour en déduire la résistance à l'avancement.

La combinaison de ce paramètre et des données du programme de contrôle permet d'identifier un blocage des roues, par exemple, et d'effectuer une série de manoeuvres de dégagement (changement de sens, pivotement...).

Il permet également d'identifier une pente importante auquel cas le programme fait pivoter l'engin d'un angle prédéfini pour aborder la pente en oblique ce qui diminue le besoin en énergie et permet d'utiliser des moteurs de roues d'une puissance et d'un poids compatible avec le principe d'alimentation solaire directe.

Selon un autre aspect de l'invention, illustré à la figure 11, on prévoit un système de détection de limite de surface en l'absence de limites naturelles faisant obstacle.

Lorsque les limites de la surface à tondre ne sont pas définies par des obstacle naturels tels que barrières, clôtures, bordures, piquets (plots), etc. on peut utiliser un fil 93 parcouru par un courant alternatif (p.e. 5 KHz) de faible amplitude (quelques mA) qui est déposé sur le sol le long des limites souhaitées. Cette technique est bien connue pour la conduite d'engins autonomes. L'alimentation électrique peut elle même provenir de cellules photovoltaïques fixes, p.e. aux extrémités du ou des fils, le courant continu original étant transformé en un courant alternatif de fréquence souhaitée.

Alternativement, un système passif plus sûr car indépendant de tout système d'alimentation et ne pouvant pas être mis hors service par une coupure accidentelle du fil.

Il s'agira par exemple d'une chaîne métallique déposée sur le sol. Le capteur frontal permettra la détection de la masse métallique par une modification de son inductance.

Dans tout les cas le système réagit dès l'approche d'une limite en analysant le signal du capteur et en calculant la distance qui sépare l'engin de la limite. Lorsque cette distance devient inférieure à une distance préprogrammée, l'engin pivote jusqu'à ce que la distance devient supérieure à celle préprogrammée.

Si le fait de pivoter dans un sens rapproche l'engin de la limite au lieu de l'en éloigner, le système de contrôle change automatiquement le sens du pivotement. Si pour une raison ou un autre l'engin se rapproche trop de la limite, le système de contrôle met en route la procédure de collision tel que décrit ci-dessus (recul suivi de pivotement).

Selon encore un autre aspect de l'invention on prévoit un système de gestion de l'énergie.

L'unité de gestion de l'énergie commandée par le microcontrôleur a deux fonctions: gestion de l'état de charge de la batterie de back-up, détection de période nocturne et mise en attente du système avec consommation minimum.

La batterie est prévue pour permettre le fonctionnement de l'électronique dans l'obscurité en maintenant certains circuits constamment sous tension. Elle permet également le fonctionnement de la tondeuse dans les zones d'ombre ou lors des passages nuageux et lisse l'énergie photovoltaïque fournie durant le fonctionnement diurne et doit donc être gardée suffisamment chargée.

Le système de contrôle vérifie constamment la tension aux bornes de la batterie et effectue une moyenne arithmétique sur une période donnée. Si la tension moyenne descend en dessous d'une valeur critique programmée, le système de contrôle vérifie que l'engin ne se trouve pas dans une zone d'ombre comme décrit précédemment. Si ce n'est pas le cas, l'engin est stoppé et attend que la tension remonte a une valeur acceptable.

Si une zone d'ombre a été détectée, l'engin termine la routine de sortie d'ombre avant de s'arrêter.

Lorsque la nuit tombe, le courant provenant des cellules photovoltaïques diminue, finit par s'annuler et devient même négatif par décharge de la batterie à travers les diodes photovoltaïques.

Pour éviter ce phénomène il peut être prévu une diode externe en série avec la batterie de cellules et empêchant le courant de s'inverser.

La diode entraîne malheureusement une chute de tension qui diminue le rendement de l'ensemble.

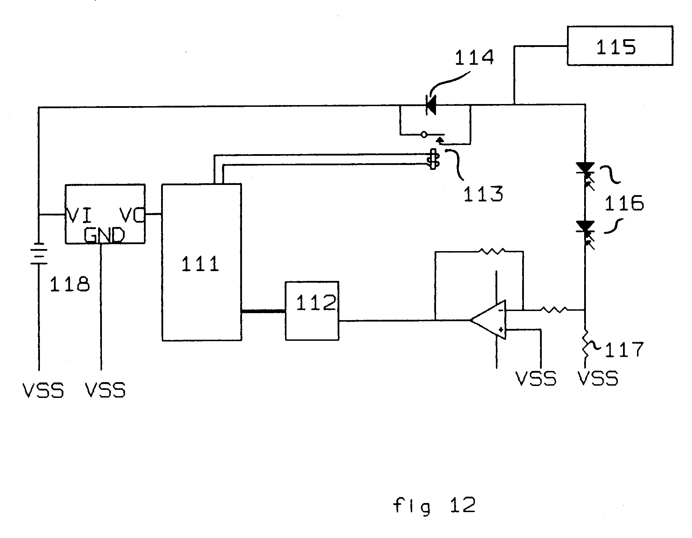

Selon un aspect de la présente invention, la chute de tension dans la diode est éliminée en court-circuitant celle-ci en fonctionnement normal (diurne) au moyen d'un interrupteur (relais ou transistor) commandé par le microcontrôleur. La fig. 12 illustre ainsi cet aspect en représentant un contrôleur 111, un convertisseur analogique-numérique 112, un contact 113, une diode 114, une unité de contrôle moteur 115, les cellules voltaïques 116, un shunt de mesure de courant 117 et une batterie 118.

Celui-ci mesure constamment le courant provenant des cellules photovoltaïques et lorsqu'il détecte le passage par zéro de la mesure, il coupe automatiquement l'interrupteur isolant les cellules et les éléments de puissance du circuit de batterie. Il met également l'engin en état d'attente.

La diode en parallèle sur l'interrupteur permet au courant de redevenir positif lorsque la tension des cellules redevient supérieure à la tension de batterie augmentée de la chute de tension dans la diode. L'engin est alors remis en route et le microcontrôleur rétablit alors le contact.

L'engin est également de préférence muni d'un détecteur d'humidité connu en soi. Au delà d'un certain seuil d'humidité, la tondeuse est mise en état d'attente. Si le degré d'humidité diminue en deçà d'une certaine valeur de consigne, le fonctionnement de l'engin reprend dans la mesure où les autres paramètres le permettent. Ceci permet d'éviter le fonctionnement de l'engin sous la pluie ou sur une pelouse trop humide, fonctionnement qui serait peu efficace et pourrait conduire à des blocages (boue, flaques etc..).

Le système de guidage de l'engin peut suivre différents algorithmes et n'est pas limité à ce qui a été décrit ci-dessus.

Selon l'invention , on peut également en effet adopter un système de 'mapping' permettant à l'engin de mettre en mémoire les limites de la surface à tondre, les zones déjà tondues et pour chaque unité de surface tondue précédemment l'effort de coupe sur ladite unité. Ceci permet à l'engin d'optimaliser ultérieurement le parcours de tonte en repassant plus souvent sur des zones ou l'herbe pousse plus rapidement.

Le 'mapping' attribue pour chaque unité de surface un point mémoire avec un paramètre 'effort de coupe-obstacle limite' ce qui lui permet de dresser une carte de la surface à couvrir. L'engin peut se repérer grâce à l'apprentissage préalable des obstacles sur le terrain. Cette technique est connue en soi. La connaissance de la vitesse de chaque roue motrice permet en effet de connaître la distance et la direction.

On peut également concevoir des systèmes de positionnement ou de repositionnement par localisation précise et périodique de générateur(s) (optiques, ultrasonique ou haute fréquence p.e.) disposés sur le terrain.

A titre exemplatif les solutions suivantes ont été apportées au problème de réalisation d'un panneau supérieur suffisamment rigide, léger et protégeant efficacement les cellules photovoltaïques.

Comme décrit dans la figure 14, les cellules sont disposées sur une feuille en matériau élastique 41 au fond d'un moule. Le moule et la feuille élastique sont percées de trous 42 placés sous les cellules. Un vide 43 est créé sous le moule pressant les cellules 44 contre la feuille élastique. Les cellules sont connectées entre elles électriquement et le produit de moulage (mousse de polyuréthanne rigide) est injecté dans le moule 45 noyant les cellules dans la résine. Après durcissement et démoulage, la face extérieure du panneau, de préférence prévue légèrement bombée, est protégée d'une membrane plastique transparente protégeant les cellules de toute agression extérieure, notamment des effets de la pluie.

L'invention n'est pas limitée au mode particulier de mise en oeuvre susmentionnée et peut varier dans sa réalisation et ses détails dans le cadre défini par les revendications.

**Revendications**

**Revendications pour les Etats contractants suivants: AT, BE, CH, DE, DK, ES, GB, GR, IT, LI, LU, NL, SE**

1. Tondeuse à gazon autonome, à moteur(s) électrique(s) comportant au moins un système de coupe, une roue motrice, un système électronique de commande et de contrôle, une batterie rechargeable et/ou des cellules photovoltaïques, caractérisé en ce que

   le système de coupe est à faible consommation, consommation permettant l'alimentation directe de la tondeuse a partir d'une source photovoltaïque, apte à être portée par la tondeuse,

   en fonctionnement le parcours de la tondeuse étant déterminé en outre par des réponses à des obstacles aux limites de la surface à tondre et/ou des câbles alimentés par un faible courant de sorte que la tonte puisse se dérouler de manière quasi-permanente durant toute ou une partie de la période de tonte, la pelouse étant ainsi en fait maintenue tondue; réponses dépendantes d'un algorithme mis en mémoire et traité par un microprocesseur, la tondeuse étant soit en fonctionnement, soit en état d'attente ou de recharge, le fonctionnement dépendant de l'état de charge de la batterie rechargeable et/ou de l'ensoleillement.

2. Tondeuse à gazon autonome, à moteur(s) électrique(s), selon la revendication 1, caractérisée en ce qu'elle comporte au moins un moyen de détection des surfaces d'herbe à couper par mesure de l'énergie absorbée par le système de coupe.

3. Tondeuse à gazon autonome, à moteur(s) électrique(s), selon la revendication 1 ou 2, caractérisée en ce qu'elle comporte au moins un détecteur de vitesse sur chaque roue ou chenille motrice.

4. Tondeuse selon selon n'importe laquelle des revendications 1 à 3 caractérisée en ce que la batterie rechargeable est alimentée Par des cellules photovoltaïques.

5. Tondeuse selon n'importe laquelle des revendications 1 à 3 caractérisée en ce que la batterie rechargeable peut être alimentée à une source d'alimentation présente sur ou à proximité de la surface à tondre, la tondeuse s'y déplacant automatiquement et périodiquement selon un algorithme déterminé dépendant de l'état de charge de ladite batterie.

6. Tondeuse à gazon autonome selon la revendication 1 caractérisé en ce que la puissance totale utilisée par le ou lesdits moteurs est inférieure ou égale à 120 W.

7. Tondeuse selon n'importe laquelle des revedications précédentes caractérisée en ce que la puissance totale est inférieure à 100 W.

8. Tondeuse selon n'importe laquelle des revendications précédentes caractérisée en ce que la puissance totale est comprise entre 10 et 60 W.

9. Tondeuse selon les revendications précédentes caractérisée en ce que la capacité de la batterie rechargeable est inférieure à 2 A/h.

10. Tondeuse selon la revendication 2 ou 3 caractérisée en ce qu'elle interrompt tout mouvement et toute opération de tonte lorsque l'état de charge de la batterie ou l'ensoleillement est inférieure à une valeur de consigne, l'engin se trouvant alors en état d'attente ou en mode de recharge.

11. Tondeuse selon la revendication précédente caractérisée en ce qu'à chaque roue est associé un détecteur de charge.

12. Tondeuse selon la revendication précédente caractérisée en ce qu'elle présente au moins deux roues motrices et en ce qu'à chaque roue motrice est associé un moteur indépendant.

13. Tondeuse selon n'importe laquelle des revendications précédente caractérisée en ce qu'elle comporte un détecteur de champ à l'avant dudit chassis permettant de détecter les limites de la zone à tondre fixées par un ou des câbles alimentés par un faible courant.

14. Tondeuse selon n'importe laquelle des revendications précédentes caractérisée en ce que les obstacles sont détectés et contournés par analyse des mouvements relatifs d'un plateau supérieur, comportant éventuellement des cellules photovoltaïques, et d'un châssis inférieur.

15. Tondeuse selon n'importe laquelle des revendications précédentes caractérisée en ce que le poids de la batterie rechargeable est inférieure à 5 kg.

16. Tondeuse selon n'importe laquelle des revendications précédentes caractérisée en ce que le poids de la batterie rechargeable est inférieure à 1 kg.

17. Tondeuse selon n'importe laquelle des revendications précédentes caractérisée en ce qu'elle comporte en outre,

   - un dispositif de recherche des surfaces d'herbe à couper par l'interaction du système d'avancement de l'engin, du dispositif de détection précité et d'un microordinateur;

18. Tondeuse selon n'importe laquelle des revendications précédentes caractérisée en ce qu'elle comporte en outre,

   - un système de sécurité basé sur l'utilisation d'un détecteur de charge sur chaque roue.

19. Tondeuse selon n'importe laquelle des revendications précédentes caractérisée en ce qu'elle comporte en outre,
   un algorithme d'évitement des zones d'ombre par analyse de la variation d'ensoleillement pour une distance parcourue déterminée

20. Tondeuse selon n'importe laquelle des revendications précédentes caractérisée en ce qu'elle comporte en outre,

   - un détecteur d'humidité provoquant l'arrêt et le démarrage de l'engin selon le degré d'humidité.

21. Tondeuse selon n'importe laquelle des revendications précédentes caractérisée en ce que la tête de coupe comprend un plateau inférieur et un plateau supérieur circulaires de dimension égale à la surface couverte par les lames en extension dont le centre est décalé vers l'arrière d'une distance égale à la longueur utile des couteaux.

22. Méthode pour tondre une pelouse caractérisée en ce qu'une tondeuse selon la revendication 1 est mise en place et laissée de manière autonome pendant au moins plusieurs jours.

23. Méthode pour maintenir une pelouse tondue caractérisée en ce qu'une tondeuse selon la revendication 1 est mise en place et laissée de manière autonome pendant au moins plusieurs jours.

**Revendications pour l'Etat contractant suivant : FR**

1. Tondeuse à gazon autonome, à moteur(s) électrique(s) comportant au moins un système de coupe, une roue motrice, un système électronique de commande et de contrôle, une batterie rechargeable et/ou des cellules photovoltaïques, caractérisé en ce que
le système de coupe est à faible consommation, consommation permettant l'alimentation directe de la tondeuse à partir d'une source photovoltaïque, apte à être portée par la tondeuse,
en fonctionnement le parcours de la tondeuse étant déterminé en outre par des réponses à des obstacles aux limites de la surface à tondre et/ou des câbles alimentés par un faible courant de sorte que la tonte puisse se dérouler de manière quasi-permanente durant toute ou une partie de la période de tonte, la pelouse étant ainsi en fait maintenue tondue; réponses dépendantes d'un algorithme mis en mémoire et traité par un microprocesseur, la tondeuse étant soit en fonctionnement, soit en état d'attente ou de recharge, le fonctionnement dépendant de l'état de charge de la batterie rechargeable et/ou de l'ensoleillement, le système de coupe de ladite tondeuse n'étant pas à effet de cisaillement par lame et contre-lame.

2. Tondeuse à gazon autonome, à moteur(s) électrique(s), selon la revendication 1, caractérisée en ce qu'elle comporte au moins un moyen de détection des surfaces d'herbe à couper par mesure de l'énergie absorbée par le système de coupe.

3. Tondeuse à gazon autonome, à moteur(s) électrique(s), selon la revendication 1 ou 2, caractérisée en ce qu'elle comporte au moins un détecteur de vitesse sur chaque roue ou chenille motrice.

4. Tondeuse selon selon n'importe laquelle des revendications 1 à 3 caractérisée en ce que la batterie rechargeable est alimentée par des cellules photovoltaïques.

5. Tondeuse selon n'importe laquelle des revendications 1 à 3 caractérisée en ce que la batterie rechargeable peut être alimentée à une source, d'alimentation présente sur ou à proximité de la surface à tondre, la tondeuse s'y déplaçant automatiquement et périodiquement selon un algorithme déterminé dépendant de l'état de charge de ladite batterie.

6. Tondeuse à gazon autonome selon la revendication 1 caractérisé en ce que la puissance totale utilisée par le ou lesdits moteurs est inférieure ou égale à 120 W.

7. Tondeuse selon n'importe laquelle des revedications précédentes caractérisée en ce que la puissance totale est inférieure à 100 W.

8. Tondeuse selon n'importe laquelle des revendications précédentes caractérisée en ce que la puissance totale est comprise entre 10 et 60 W.

9. Tondeuse selon les revendications précédentes caractérisée en ce que la capacité de la batterie rechargeable est inférieure à 2 A/h.

10. Tondeuse selon la revendication 2 ou 3 caractérisée en ce qu'elle interrompt tout mouvement et toute opération de tonte lorsque l'état de charge de la batterie ou l'ensoleillement est inférieur à une valeur de consigne, l'engin se trouvant alors en état d'attente ou en mode de recharge.

11. Tondeuse selon la revendication précédente caractérisée en ce qu'à chaque roue est associé un détecteur de charge.

12. Tondeuse selon la revendication précédente caractérisée en ce qu'elle présente au moins deux roues motrices et en ce qu'à chaque roue motrice est associé un moteur indépendant.

13. Tondeuse selon n'importe laquelle des revendications précédente caractérisée en ce qu'elle comporte un détecteur de champ à l'avant dudit chassis permettant de détecter les limites de la zone à tondre fixées par un ou des câbles alimentés par un faible courant.

14. Tondeuse selon n'importe laquelle des revendications précédentes caractérisée en ce que les obstacles sont détectés et contournés par analyse des mouvements relatifs d'un plateau supérieur, comportant éventuellement des cellules photovoltaïques, et d'un châssis inférieur.

15. Tondeuse selon n'importe laquelle des revendications précédentes caractérisée en ce que le poids de la batterie rechargeable est inférieur à 5 kg.

16. Tondeuse selon n'importe laquelle des revendications précédentes caractérisée en ce que le poids de la batterie rechargeable est inférieur à 1 kg.

17. Tondeuse selon n'importe laquelle des revendications précédentes caractérisée en ce qu'elle comporte en outre,

   - un dispositif de recherche des surfaces d'herbe à couper par l'interaction du système d'avancement de l'engin, du dispositif de détection précité et d'un microordinateur;

18. Tondeuse selon n'importe laquelle des revendications précédentes caractérisée en ce qu'elle comporte en outre,

   - un système de sécurité basé sur l'utilisation d'un détecteur de charge sur chaque roue.

19. Tondeuse selon n'importe laquelle des revendications précédentes caractérisée en ce qu'elle comporte en outre,
   un algorithme d'évitement des zones d'ombre par analyse de la variation d'ensoleillement pour une distance parcourue déterminée

20. Tondeuse selon n'importe laquelle des revendications précédentes caractérisée en ce qu'elle comporte en outre,

   - un détecteur d'humidité provoquant l'arrêt et le démarrage de l'engin selon le degré d'humidité.

21. Tondeuse selon n'importe laquelle des revendications précédentes caractérisée en ce que la tête de coupe comprend un plateau inférieur et un plateau supérieur circulaires de dimension égale à la surface couverte par les lames en extension dont le centre est décalé vers l'arrière d'une distance égale à la longueur utile des couteaux.

22. Méthode pour tondre une pelouse caractérisée en ce qu'une tondeuse selon la revendication 1 est mise en place et laissée de manière autonome pendant au moins plusieurs jours.

23. Méthode pour maintenir une pelouse tondue caractérisée en ce qu'une tondeuse selon la revendication 1 est mise en place et laissée de manière autonome pendant au moins plusieurs jours.

**Claims**

**Claims for the following Contracting States : AT, BE, CH, DE, DK, ES, GB, GR, IT, LI, LU, NL, SE**

1. Autonomous lawnmower, with electric motor(s) comprising at least a cutting system, a driving wheel, an electronic operating and control system, a rechargeable battery and/or photovoltaic cells, characterized in that
   the cutting system is one of low consumption , permitting the direct powering of the lawnmower from a photovoltaic source adapted to be carried by the mower,
   in a state of operation, the path of the lawnmower being determined moreover by responses to obstacles at the limits of the surface to be mowed and/or to cables supplied by a low current in such a way that the mowing operation may be performed in a quasi-permanent way during all or a part of the mowing period, the lawn being so in fact kept mowed, said responses depending on an algorithm stored in memory and said algorithm being used by a microprocessor, the mower being either in a state of operation, or in a state of waiting or recharging, the operation depending upon the level of charge of the rechargeable battery and/or the insolation.

2. Lawnmower, with electric motor(s), according to claim 2, characterized in that it comprises at least a means of detecting grass surface to be mowed by the measure of the absorbed energy by the cutting system.

3. Lawnmower, with electric motor(s), according to claims 1 or 2, characterized in that it comprises at least one speed detector on each driving wheel or track.

4. Lawnmower according to any of the claims 1 to 3 characterized in that the rechargeable battery is powered by photovoltaic cells.

5. Lawnmower according to any of the claims 1 to 3 characterized in that the rechargeable battery is powered by a power source present on or near the surface to be mowed, the mower automatically moving there according to a determined algorithm depending among others upon the state of charge of the aforesaid battery.

6. Lawnmower according to any of the preceding claims characterized in that the total power used by said motor(s) is less than or equal to 120 W.

7. Lawnmower according to any of the preceding claims characterized in that the total power is less than 100 W.

8. Lawnmower according to any of the preceding claims characterized in that the total power is comprised between 10 and 60W.

9. Lawnmower according to any of the preceding claims characterized in that the capacity of the rechargeable battery is less than 2 amps/h.

10. Lawnmower according to any preceding claim characterized in that all movements and all mowing operations are interrupted by the electronic operating and control system when the state of charge of the battery or the sunshine is less than a reference value, the device being then in a state of waiting or in a recharging mode.

11. Lawnmower according to any preceding claim characterized in that to each wheel is associated a charge detector.

12. Lawnmower according to any preceding claim characterized in that there are at least two driving wheel and in that for each driving wheel there is connected an independent motor.

13. Lawnmower according to any preceding claim characterized in that it comprises a field detector at the front of said chassis which allows the detection of the limits of the zone to be mowed determined by one or several cables being supplied with a low current.

14. Lawnmower according to any preceding claim characterized in that the obstacles are detected and skirted by analysis of the relative movements of a upper plate, possibly comprising photovoltaic cells, and a lower chassis.

15. Lawnmower according to any preceding claim characterized in that the weight of the rechargeable battery is less than 5 kg.

16. Lawnmower according to any preceding claim characterized in that the weight of the rechargeable battery is less than 1 kg.

17. Lawnmower according to any preceding claim characterized in that it further comprises

   - a system for searching grass surface to be cut by the interaction of the system for moving the device, the said detection system and a microcomputer.

18. Lawnmower according to any preceding claim characterized in that it further comprises a security system based on the use of charge detector on each wheel.

19. Lawnmower according to any preceding claim characterized in that it further comprises
an algorithm for avoiding shaded zones through the analysis of the variation in sunshine for determined distance run.

20. Lawnmower according to any preceding claim characterized in that it further comprises a humidity detector which provokes the device to stop and start according to the degree of humidity.

21. Lawnmower according to any preceding claim characterized in that the cutting head comprises a circular lower plate and a circular upper plate of dimension equal to the surface covered by the extended blades of which the center is offset toward the rear by a distance equal to the useful length of the cutters.

22. Method for mowing a lawn characterized in that a lawnmower according to claim 1 is positioned and left in an autonomous manner for at least several days.

23. Method for keeping a lawn mowed, wherein the mower according to claim 1 is positioned and left in an autonomous manner for at least several days.

**Claims for the following Contracting State : FR**

1. Autonomous lawnmower, with electric motor(s) comprising at least a cutting system, a driving wheel, an electronic operating and control system, a rechargeable battery and/or photovoltaic cells, characterized in that
the cutting system is one of low consumption , permitting the direct powering of the lawnmower from a photovoltaic source adapted to be carried by the mower,
in a state of operation, the path of the lawnmower being determined moreover by responses to obstacles at the limits of the surface to be mowed and/or to cables supplied by a low current in such a way that the mowing operation may be performed in a quasi-permanent way during all or a part of the mowing period, the lawn being so in fact kept mowed, said responses depending on an algorithm stored in memory and said algorithm being used by a microprocessor, the mower being either in a state of operation, or in a state of waiting or recharging, the operation depending upon the level of charge of the rechargeable battery and/or the insolation, provided that the cutting system is not one based on the shearing effect of a blade and a counter-blade.

2. Lawnmower, with electric motor(s), according to claim 2, characterized in that it comprises at least a means of detecting grass surface to be mowed by the measure of the absorbed energy by the cutting system.

3. Lawnmower, with electric motor(s), according to claims 1 or 2, characterized in that it comprises at least one speed detector on each driving wheel or track.

4. Lawnmower according to any of the claims 1 to 3 characterized in that the rechargeable battery is powered by photovoltaic cells.

5. Lawnmower according to any of the claims 1 to 3 characterized in that the rechargeable battery is powered by a power source present on or near the surface to be mowed, the mower automatically moving there according to a determined algorithm depending among others upon the state of charge of the aforesaid battery.

6. Lawnmower according to any of the preceding claims characterized in that the total power used by said motor(s) is less than or equal to 120 W.

7. Lawnmower according to any of the preceding claims characterized in that the total power is less than 100 W.

8. Lawnmower according to any of the preceding claims characterized in that the total power is comprised between 10 and 60W.

9. Lawnmower according to any of the preceding claims characterized in that the capacity of the rechargeable battery is less than 2 amps/h.

10. Lawnmower according to any preceding claim characterized in that all movements and all mowing operations are interrupted by the electronic operating and control system when the state of charge of the battery or the sunshine is less than a reference value, the device being then in a state of waiting or in a recharging mode.

11. Lawnmower according to any preceding claim characterized in that to each wheel is associated a charge detector.

12. Lawnmower according to any preceding claim characterized in that there are at least two driving wheel and in that for each driving wheel there is connected an independent motor.

13. Lawnmower according to any preceding claim characterized in that it comprises a field detector at the front of said chassis which allows the detection of the limits of the zone to be mowed determined by one or several cables being supplied with a low current.

14. Lawnmower according to any preceding claim characterized in that the obstacles are detected and skirted by analysis of the relative movements of a upper plate, possibly comprising photovoltaic cells, and a lower chassis.

15. Lawnmower according to any preceding claim characterized in that the weight of the rechargeable battery is less than 5 kg.

16. Lawnmower according to any preceding claim characterized in that the weight of the rechargeable battery is less than 1 kg.

17. Lawnmower according to any preceding claim characterized in that it further comprises

- a system for searching grass surface to be cut by the interaction of the system for moving the device, the said detection system and a microcomputer.

18. Lawnmower according to any preceding claim characterized in that it further comprises a security system based on the use of charge detector on each wheel.

19. Lawnmower according to any preceding claim characterized in that it further comprises an algorithm for avoiding shaded zones through the analysis of the variation in sunshine for determined distance run.

20. Lawnmower according to any preceding claim characterized in that it further comprises a humidity detector which provokes the device to stop and start according to the degree of humidity.

21. Lawnmower according to any preceding claim characterized in that the cutting head comprises a circular lower plate and a circular upper plate of dimension equal to the surface covered by the extended blades of which the center is offset toward the rear by a distance equal to the useful length of the cutters.

22. Method for mowing a lawn characterized in that a lawnmower according to claim 1 is positioned and left in an autonomous manner for at least several days.

23. Method for keeping a lawn mowed, wherein the mower according to claim 1 is positioned and left in an autonomous manner for at least several days.

**Patentansprüche**

**Patentansprüche für folgende Vertragsstaaten : AT, BE, CH, DE, DK, ES, GB, GR, IT, LI, LU, NL, SE**

1. Autonom arbeitender Rasenmäher mit Elektromotor(en), mit wenigstens einem Schneidsystem, einem Antriebsrad, einer elektronischen Steuer- und Regeleinrichtung, einer wiederaufladbaren Batterie und/oder photovoltaischen Zellen, dadurch gekennzeichnet, daß das Schneidsystem einen geringen Verbrauch aufweist, der eine direkte Versorgung der Vorrichtung aus einer photovoltaischen Quelle erlaubt, die geeignet ist, von der Vorrichtung mitgeführt zu werden, daß während des Betriebes der Vorrichtung deren Wegstrecke außerdem durch Reaktionen mit Hindernissen, die sich an den Grenzen der zu mähenden Fläche befinden, und/oder mit Schwachstromkabeln begrenzt wird derart, daß der Mähvorgang während der gesamten oder eines Teils der Mähperiode gleichsam permanent erfolgen kann und die Wiese auf diese Weise gemäht bleibt, und daß in Abhängigkeit vor einem Algorithmus, der in einem Mikroprozessor gespeichert und verarbeitet wird, sich die Vorrichtung entweder in Betrieb oder in einem Warte- oder Ladezustand befindet, wobei der Betriebszustand vom Ladezustand der wiederaufladbaren Batterie und/oder der Sonneneinstrahlung abhängt.

2. Autonom arbeitender Rasenmäher mit Elektromotor(en) gemäß Anspruch 1, dadurch gekennzeichnet, daß sie wenigstens eine Einrichtung zur Erkennung der zu schneidenden Grasflächen durch Messen der vom Schneidsystem aufgenommenen Energie aufweist.

3. Autonom arbeitender Rasenmäher mit Elektromotor(en) gemäß Anspruch 1 oder 2, dadurch gekennzeichnet, daß sie wenigstens einen Geschwindigkeitsmesser an jedem Antriebsrad oder Antriebsraupe aufweist.

4. Rasenmäher nach einem der Ansprüche 1 bis 3, dadurch gekennzeichnet, daß die wiederaufladbare Batterie durch photovoltaische Zellen gespeist wird.

5. Rasenmäher nach einem der Ansprüche 1 bis 3, dadurch gekennzeichnet, daß die wiederaufladbare Batterie durch eine Versorgungsquelle auf oder in der Nähe der zu mähenden Fläche gespeist werden kann, wobei sich die Vorrichtung automatisch und periodisch gemäß einem Algorithmus, der durch den Ladezustand der genannten Batterie bestimmt wird, dorthin bewegt.

6. Autonom arbeitender Rasenmäher nach Anspruch 1, dadurch gekennzeichnet, daß die gesamte von dem oder den genannten Motoren verbrauchte Leistung geringer oder gleich als 120 W ist.

7. Rasenmäher nach einem der vorhergehenden Ansprüche, dadurch gekennzeichnet, daß die gesamte Leistung geringer als 100 W ist.

8. Rasenmäher nach einem der vorhergehenden Ansprüche, dadurch gekennzeichnet, daß die gesamte Leistung zwischen 10 und 60 beträgt.

9. Rasenmäher nach einem der vorhergehenden Ansprüche, dadurch gekennzeichnet, daß die Kapazität der wiederaufladbaren Batterie geringer als 2 A/h ist.

10. Rasenmäher nach Anspruch 2 oder 3, dadurch gekennzeichnet , daß sie jede Bewegung und jede Mähtätigkeit unterbricht, sobald der Ladezustand der Batterie oder die Sonneneinstrahlung unterhalb eines vorgegebenen Wertes liegt und daß die Vorrichtung sich dann in einem Wartezustand oder im Ladezustand befindet.

11. Rasenmäher nach dem vorhergehenden Anspruch, dadurch gekennzeichnet, daß jedem Antriebsrad eine Vorrichtung zur Messung der Ladung zugeordnet ist.

12. Rasenmäher nach dem vorhergehenden Anspruch, dadurch gekennzeichnet, daß sie wenigstens zwei Antriebsräder aufweist und daß jedem Antriebsrad ein unabhängiger Motor zugeordnet ist.

13. Rasenmäher nach einem der vorhergehenden Ansprüche, dadurch gekennzeichnet, daß vor besagtem Fahrgestell ein Felddetektor angeordnet ist, der es gestattet, die Grenzen des zu mähenden Bereiches zu erkennen, die durch ein oder mehreren von Schwachstrom durchflossenen Kabeln festgelegt sind.

14. Rasenmäher nach einem der vorhergehenden Ansprüche, dadurch gekennzeichnet, daß die Hindernisse durch eine Analyse der Relativbewegung zwischen einer oberen Platte, die gegebenenfalls die Photozellen trägt, und einem unteren Fahrgestell detektiert und umfahren werden.

15. Rasenmäher nach einem der vorhergehenden Ansprüche, dadurch gekennzeichnet, daß das Gewicht der wiederaufladbaren Batterie geringer als 5 kg ist.

16. Rasenmäher nach einem der vorhergehenden Ansprüche, dadurch gekennzeichnet, daß das Gewicht der wiederaufladbaren Batterie geringer als 1 kg ist.

17. Rasenmäher nach einem der vorhergehenden Ansprüche, dadurch gekennzeichnet, daß sie außerdem eine Einrichtung zum Erkennen der zu mähenden Rasenflächen durch die Wechselwirkung zwischen dem Antriebssystem der Vorrichtung, dem vorgenannten Detektionssystem und einem Microcomputer aufweist.

18. Rasenmäher nach einem der vorhergehenden Ansprüche, dadurch gekennzeichnet, daß sie außerdem ein Sicherheitssystem aufweist, das von einem Ladekontrollmeßgerät an jedem Rad Gebrauch macht.

19. Rasenmäher nach einem der vorhergehenden Ansprüche, dadurch gekennzeichnet, daß sie außerdem einen Algorithmus zur Vermeidung von Schattenbereichen durch eine Analyse der Variation der Sonneneinstrahlung für eine vorgegebene zu durchlaufende Wegstrecke aufweist.

20. Rasenmäher nach einem der vorhergehenden Ansprüche, dadurch gekennzeichnet, daß sie außerdem einen Feuchtigkeitssensor aufweist, der in Abhängigkeit von Feuchtegrad den Halt und den Anlauf der Vorrichtung veranlaßt.

21. Rasenmäher nach einem der vorhergehenden Ansprüche, dadurch gekennzeichnet, daß der Schneidkopf je eine untere und eine obere kreisförmige Platte gleicher Abmessungen aufweist, deren Oberfläche mit ausfahrbaren Klingen versehen sind, deren Zentrum um einen Abstand zurückgesetzt ist, der der Länge der Messer entspricht.

22. Verfahren zum Mähen einer Wiese, dadurch gekennzeichnet, daß der Rasenmäher gemäß Patentanspruch 1 in Position gebracht und dort für wenigstens mehrere Tage in autonomer Weise belassen wird.

23. Verfahren zur Pflege einer zu mähenden Rasenfläche, dadurch gekennzeichnet, daß eine Vorrichtung gemäß Patentanspruch 1 in Position gebracht und dort für wenigstens mehrere Tage in autonomer Weise belassen wird.

**Patentansprüche für folgenden Vertragsstaat : FR**

1. Autonom arbeitender Rasenmäher mit Elektromotor(en), mit wenigstens einem Schneidsystem, einem Antriebsrad, einer elektronischen Steuer- und Regeleinrichtung, einer wiederaufladbaren Batterie und/oder photovoltaischen Zellen, dadurch gekennzeichnet, daß das Schneidsystem einen geringen Verbrauch aufweist, der eine direkte Versorgung der Vorrichtung aus einer photovoltaischen Quelle erlaubt, die geeignet ist, von der Vorrichtung mitgeführt zu werden, daß während des Betriebes der Vorrichtung deren Wegstrecke außerdem durch Reaktionen mit Hindernissen, die sich an den Grenzen der zu mähenden Fläche befinden, und/oder mit Schwachstromkabeln begrenzt wird derart, daß der Mähvorgang während der gesamten oder eines Teils der Mähperiode gleichsam permanent erfolgen kann und die Wiese auf diese Weise gemäht bleibt, und daß in Abhängigkeit vor einem Algorithmus, der in einem Mikroprozessor gespeichert und verarbeitet wird, sich die Vorrichtung entweder in Betrieb oder in einem Warte- oder Ladezustand befindet, wobei der Betriebszustand vom Ladezustand der wiederaufladbaren Batterie und/oder der Sonneneinstrahlung abhängt, und daß das Schneidsystem der genannten Mähvorrichtung keine Schneidwirkung mittels Klinge und Gegenklinge ausübt.

2. Autonom arbeitender Rasenmäher mit Elektromotor(en) gemäß Anspruch 1, dadurch gekennzeichnet, daß sie wenigstens eine Einrichtung zur Erkennung der zu schneidenden Grasflächen durch Messen der vom Schneidsystem aufgenommenen Energie aufweist.

3. Autonom arbeitender Rasenmäher mit Elektromotor(en) gemäß Anspruch 1 oder 2, dadurch gekennzeichnet, daß sie wenigstens einen Geschwindigkeitsmesser an jedem Antriebsrad oder Antriebsraupe aufweist.

4. Rasenmäher nach einem der Ansprüche 1 bis 3, dadurch gekennzeichnet, daß die wiederaufladbare Batterie durch photovoltaische Zellen gespeist wird.

5. Rasenmäher nach einem der Ansprüche 1 bis 3, dadurch gekennzeichnet, daß die wiederaufladbare Batterie durch eine Versorgungsquelle auf oder in der Nähe der zu mähenden Fläche gespeist werden kann, wobei sich die Vorrichtung automatisch und periodisch gemäß einem Algorithmus, der durch den Ladezustand der genannten Batterie bestimmt wird, dorthin bewegt.

6. Autonom arbeitender Rasenmäher nach Anspruch 1, dadurch gekennzeichnet, daß die gesamte von dem oder den genannten Motoren verbrauchte Leistung geringer oder gleich als 120 W ist.

7. Rasenmäher nach einem der vorhergehenden Ansprüche, dadurch gekennzeichnet, daß die gesamte Leistung geringer als 100 W ist.

8. Rasenmäher nach einem der vorhergehenden Ansprüche, dadurch gekennzeichnet, daß die gesamte Leistung zwischen 10 und 60 beträgt.

9. Rasenmäher nach einem der vorhergehenden Ansprüche, dadurch gekennzeichnet, daß die Kapazität der wiederaufladbaren Batterie geringer als 2 A/h ist.

10. Rasenmäher nach Anspruch 2 oder 3, dadurch gekennzeichnet , daß sie jede Bewegung und jede Mähtätigkeit unterbricht, sobald der Ladezustand der Batterie oder die Sonneneinstrahlung unterhalb eines vorgegebenen Wertes liegt und daß die Vorrichtung sich dann in einem Wartezustand oder im Ladezustand befindet.

11. Rasenmäher nach dem vorhergehenden Anspruch, dadurch gekennzeichnet, daß jedem Antriebsrad eine Vorrichtung zur Messung der Ladung zugeordnet ist.

12. Rasenmäher nach dem vorhergehenden Anspruch, dadurch gekennzeichnet, daß sie wenigstens zwei Antriebsräder aufweist und daß jedem Antriebsrad ein unabhängiger Motor zugeordnet ist.

13. Rasenmäher nach einem der vorhergehenden Ansprüche, dadurch gekennzeichnet, daß vor besagtem Fahrgestell ein Felddetektor angeordnet ist, der es gestattet, die Grenzen des zu mähenden Bereiches zu erkennen, die durch ein oder mehreren von Schwachstrom durchflossenen Kabeln festgelegt sind.

14. Rasenmäher nach einem der vorhergehenden Ansprüche, dadurch gekennzeichnet, daß die Hindernisse durch eine Analyse der Relativbewegung zwischen einer oberen Platte, die gegebenenfalls die Photozellen trägt, und einem unteren Fahrgestell detektiert und umfahren werden.

15. Rasenmäher nach einem der vorhergehenden Ansprüche, dadurch gekennzeichnet, daß das Gewicht der wiederaufladbaren Batterie geringer als 5 kg ist.

16. Rasenmäher nach einem der vorhergehenden Ansprüche, dadurch gekennzeichnet, daß das Gewicht der wiederaufladbaren Batterie geringer als 1 kg ist.

17. Rasenmäher nach einem der vorhergehenden Ansprüche, dadurch gekennzeichnet, daß sie außerdem eine Einrichtung zum Erkennen der zu mähenden Rasehflächen durch die Wechselwirkung zwischen dem Antriebssystem der Vorrichtung, dem vorgenannten Detektionssystem und einem Microcomputer aufweist.

18. Rasenmäher nach einem der vorhergehenden Ansprüche, dadurch gekennzeichnet, daß sie außerdem ein Sicherheitssystem aufweist, das von einem Ladekontrollmeßgerät an jedem Rad Gebrauch macht.

19. Rasenmäher nach einem der vorhergehenden Ansprüche, dadurch gekennzeichnet, daß sie außerdem einen Algorithmus zur Vermeidung von Schattenbereichen durch eine Analyse der Variation der Sonneneinstrahlung für eine vorgegebene zu durchlaufende Wegstrecke aufweist.

20. Rasenmäher nach einem der vorhergehenden Ansprüche, dadurch gekennzeichnet, daß sie außerdem einen Feuchtigkeitssensor aufweist, der in Abhängigkeit von Feuchtegrad den Halt und den Anlauf der Vorrichtung veranlaßt.

21. Rasenmäher nach einem der vorhergehenden Ansprüche, dadurch gekennzeichnet, daß der Schneidkopf je eine untere und eine obere kreisförmige Platte gleicher Abmessungen aufweist, deren Oberfläche mit ausfahrbaren Klingen versehen sind, deren Zentrum um einen Abstand zurückgesetzt ist, der der Länge der Messer entspricht.

22. Verfahren zum Mähen einer Wiese, dadurch gekennzeichnet, daß der Rasenmäher gemäß Patentanspruch 1 in Position gebracht und dort für wenigstens mehrere Tage in autonomer Weise belassen wird.

23. Verfahren zur Pflege einer zu mähenden Rasenfläche, dadurch gekennzeichnet, daß eine Vorrichtung gemäß Patentanspruch 1 in Position gebracht und dort für wenigstens mehrere Tage in autonomer Weise belassen wird.

fig 1

EP 0 550 473 B1

fig 2

10    10    10    12    19    9    17

16

9

1    18    15    7    5    4

EP 0 550 473 B1

fig 3a

12

15

4

fig 3b

fig 3c

fig 4

fig 14

fig 5b

fig 5a

fig 6

fig 7a

A

O ── MANEUVRE

N

tracking roues

detection ombre

humidite ──O──→ arret

N

detection cote blocage

generation consigne vitesse

blocage ──O──→ alarme

N

boucle principale

fig 7b

80

82

81

fig 8

80

82

91

fig 9

z → z

fig 10

fig 11

fig 12

EP 0 550 473 B1

fig 13